## Europäisches Patentamt
## European Patent Office
## Office européen des brevets

(11) Veröffentlichungsnummer : **0 053 201**
**B1**

(12) # EUROPÄISCHE PATENTSCHRIFT

(45) Veröffentlichungstag der Patentschrift :
**11.04.84**

(51) Int. Cl.³ : **A 47 L 13/16**

(21) Anmeldenummer : **80107550.8**

(22) Anmeldetag : **03.12.80**

(54) **Reinigungstuch.**

(43) Veröffentlichungstag der Anmeldung :
**09.06.82 Patentblatt 82/23**

(45) Bekanntmachung des Hinweises auf die Patenterteilung : **11.04.84 Patentblatt 84/15**

(84) Benannte Vertragsstaaten :
**AT BE CH DE FR IT LI LU NL**

(56) Entgegenhaltungen :
**DE-A- 2 458 356**
**DE-B- 2 536 440**
**DE-U- 1 914 746**
**DE-U- 7 507 155**
**DE-U- 7 619 792**

(73) Patentinhaber : **Firma Carl Freudenberg**
**Höhnerweg 2**
**D-6940 Weinheim/Bergstrasse (DE)**

(72) Erfinder : **Pässler, Michael, Dr.**
**L.-Hüttenhoferstrasse 68**
**D-8202 Neusäss (DE)**
Erfinder : **Tecl, Bohuslav**
**Im Langgewann 57**
**D-6940 Weinheim (DE)**
Erfinder : **Schumacher, Rolf**
**Schwarzwaldstrasse 5**
**D-6945 Hirschberg (DE)**

(74) Vertreter : **Weissenfeld-Richters, Helga, Dr.**
**Höhnerweg 2**
**D-6940 Weinheim/Bergstrasse (DE)**

Jouve, 18, rue St-Denis, 75001 Paris, France

## Reinigungstuch

Die Erfindung betrifft ein Reinigungstuch für den Haushalt und für die gewerbliche Anwendung, bestehend aus einem weichelastischen Nadelvlies mit einem Aufdruck aus sich reliefartig von der Oberfläche des Nadelvlieses abhebenden Gummileisten.

Ein Reinigungstuch der vorstehend angesprochenen Art wird in DE-U-76 19 792 beschrieben. Dabei sind jedoch beide Seiten mit einem reliefartig strukturierten Aufdruck versehen, was dazu führt, daß das Reinigungstuch nur für beschränkte Anwendungsfälle verwendet werden kann.

Der Erfindung liegt die Aufgabe zugrunde, ein solches Reinigungstuch nunmehr weiter zu entwickeln, derart, daß breitere Verwendungsmöglichkeiten erzielt werden.

Diese Aufgabe wird neuerungsgemäß durch eine unterschiedliche Beschichtung der Oberseite und der Unterseite des Reinigungstuches gelöst. Diese ist dadurch gekennzeichnet, daß die Höhe der Gummileisten das 0,2 bis 0,4-fache ihrer Breite beträgt, jedoch nicht mehr als das 0,5-fache der Dicke des Nadelvlieses, und daß die Rückseite mit einer kontinuierlichen Schicht aus einem offenporigen Latexschaum versehen ist, die die der Oberfläche des Nadelvlieses gegenüberliegenden Fläche überragt, und die sich zu 10 bis 40 % der Dicke des Nadelvlieses in dieses hineinerstreckt.

Im Gebrauch dient die mit den Gummileisten versehene Oberfläche des Reinigungstuches dazu, gröberen Schmutz durch eine rakelähnliche Wirkungsweise der Gummileisten zu entfernen. Diese rakelähnliche Wirkungsweise wird besonders dadurch unterstützt, daß ein Umkippen der Gummileisten während der Benutzung des Reinigungstuches sicher vermieden wird, weil das Reinigungstuch durch die kontinuierliche Schicht aus dem offenporigen Latexschaum stabilisiert ist. Andererseits weist das Reinigungstuch eine sehr große Elastizität auf, und es ist beispielsweise möglich, die Gummileisten ohne besonders großen Kraftaufwand oberflächeneben in das Gefüge des Nadelvliesstoffes einzudrücken, so daß dessen Fasern unmittelbar auf der Oberfläche des zu reinigenden Objektes zur Auflage kommen. Insbesondere dann, wenn in dem Nadelvlies neben einem überwiegenden Anteil natürlicher Fasern, beispielsweise aus Baumwolle oder Zellwolle, ein geringer Anteil an synthetischen Fasern enthalten ist, kommt dieser Effekt sehr gut zur Wirkung, weil in diesen Fällen das Nadelvlies neben einer großen Saugaktivität eine gute Sprungelastizität aufweist. Der Anteil synthetischer Fasern soll 5 bis 30 Gew.% der Fasermasse betragen, wobei ein Titer von 1,5 bis 6 bevorzugt wird. Innerhalb dieser Grenzen ist es notwendig, mit sinkendem Gewichtsanteil synthetische Fasern eines groberen Titers zu verwenden. Der Effekt läßt sich noch verstärken, wenn die Gummileisten durch ein Profil mit scharfstrukturierten Kanten begrenzt sind, beispielsweise durch ein Dreiecksprofil.

Die Gummileisten werden vorzugsweise aus einem relativ festen Werkstoff hergestellt, beispielsweise aus einem Werkstoff mit einer Härte von 60 bis 90 Shore A. Der Werkstoff kann dabei in sich geschlossene oder untereinander verbundene Zellen aufweisen, deren Gesamtporenvolumen in einer Größenordnung von 10 bis 50 % liegt. Durch eine entsprechende Ausgestaltung erhalten die Gummileisten neben den bereits vorhandenen, werkstoffbedingten sehr elastischen Eigenschaften eine verbesserte Anschmiegsamkeit an unterschiedlich strukturierten Oberflächen.

Die Länge der Gummileisten soll dem 3 bis 8-fachen ihrer jeweiligen Breite entsprechen, wobei es bevorzugt ist, die gegenseitige Zuordnung der einzelnen Gummileisten jeweils auf Lücke vorzunehmen. Diese spezielle gegenseitige Zuordnung schließt mit ein, unmittelbar benachbarte Gummileisten einander unter einem beliebigen Winkel zuzuordnen, bevorzugt jedoch unter einem Winkel zwischen 20 und 90°.

Die Gummileisten werden bevorzugt auf die Oberfläche des Reinigungstuches aufgedruckt, wozu sich Siebdruckverfahren unter Verwendung viskoser Pasten besonders eignen. Die chemische Vernetzung wird dabei vorzugsweise durch eine anschließende Erwärmung bewerkstelligt, wobei die Erwärmung gleichzeitig auch zur Vernetzung der auf die Rückseite aufgebrachten, schaumförmigen Latexschicht ausgenutzt werden kann. Nach einem anderen, ebenfalls anwendbaren Verfahren ist es möglich, die Gummileisten aus einer Folie eines unvernetzten elastomeren Werkstoffes auszustanzen, und unmittelbar an die Oberfläche des Nadelvlieses anzupressen und durch eine Erwärmung chemisch zu vernetzen. Die chemische Vernetzung kann daneben auch durch Einwirkung einer energiereichen Strahlung gegebenenfalls in einem separaten Arbeitsschritt bewerkstelligt werden. Im letztgenannten Falle können die bevorzugten elastomeren Werkstoffe zumindest teilweise durch thermoplastische Werkstoffe ersetzt werden.

Die kontinuierliche Schicht aus einem weichelastischen Latexschaum wird bevorzugt in flüssiger Form auf die Rückseite aufgebracht, wozu neben der Anwendung eines Rakelmessers auch die Anwendung von Einpresswalzen geeignet ist. Bevorzugt ist die Schicht spiegelbildlich zu der der Oberfläche des Nadelvlies gegenüberliegenden Fläche angeordnet, so daß sich ein Teil der Schicht in das Innere des Nadelvliesstoffes hineinerstreckt, wodurch ein sehr günstigerer Versteifungseffekt erzielt wird, während sich ein anderer Teil der reinen Schaumstruktur über die Fläche des Nadelvlieses erhebt. Dieser letztgenannte Teil hat besonders weichelastische Eigenschaften, und er ist von zahllosen, untereinander verbundenen, offenen Poren durchzogen. Da diese in einer unmittelbaren hydraulischen Verbindung mit den Fasern des Nadelvlieses stehen, ergibt sich ein hervorragender Wasseraufnahmeeffekt, was das neuerungsgemäße Reinigungstuch besonders geeignet macht für die unterschiedlichsten Reinigungsaufgaben im Haushalt. Das Reinigungstuch besitzt einen sehr weichen, anschmiegsamen Griff, und es ist deshalb gut zum Abtrocknen von Fenster- und Autoflächen, von Kachelflächen, Waschbecken, Geschirr etc. geeignet.

Die guten Gebrauchseigenschaften des Reinigungstuches ergeben sich im wesentlichen aus einer besonders vorteilhaften gegenseitigen Überlagerung der Eigenschaften der einzelnen Elemente. So bewirkt die kontinuierliche Schicht aus dem offenporigen Latexschaum neben einer schwammähnlichen Saugfähigkeit eine statische Abstützung der auf der Vorderseite des Reinigungstuches angeordneten Gummileisten. Diese lassen sich bei Bedarf oberflächeneben in das Nadelvlies eindrücken. Das Nadelvlies selbst dient in dem Reinigungstuch als ein Wasserspeicher, dessen Wasseraufnahmekapazität durch Anwendung geringer Drücke nur in einem sehr geringen Maße beeinflußbar ist. Es lassen sich deshalb sehr große Wassermengen in dem Nadelvlies speichern, ohne daß sich die Oberfläche deutlich naß anfühlt. Soll hingegen das eingelagerte Wasser entfernt werden, so ist hierzu lediglich ein kräftiges Auswringen erforderlich.

Eine beispielhafte Ausführung des neuerungsgemäßen Reinigungstuches ist in der in der Anlage beigefügten Zeichnung schematisch dargestellt.

Figur 1 zeigt das Reinigungstuch in längsgeschnittener Darstellung.

Figur 2 zeigt das Reinigungstuch in perspektivischer Ansicht von oben.

Das Reinigungstuch besteht aus einem Nadelvlies 3, auf dessen Oberseite Gummileisten 1 mit einem dreieckigen Profil in einer gleichmäßig wiederkehrenden Rasterung angeordnet sind und dessen Unterseite durch eine offenporige Schaumstoffschicht 2 gebildet wird. Die Schaumstoffschicht ist spiegelbildlich zu der Unterseite des Nadelvlieses angeordnet, d. h. sie erstreckt sich zu 50 % ihrer Dicke in das Nadelvlies hinein, sie hebt sich zu 50 % ihrer Dicke von der Unterseite des Nadelvlieses ab.

Das Nadelvlies hat die nachfolgende Zusammensetzung :

50 % Baumwolle
28 % Zellwolle dtex 1,7/40 mm
14 % Polyester dtex 1,7/40 mm
 8 % Polyester dtex 3,3/60 mm

Das Nadelvlies besteht aus kreuzweise aufeinandergetäfelten Faserfloren, die durch eine intensive Vernadelung mit z. B. 45 Einstichen/cm² verbunden sind. Neben einer gegenseitigen Verbindung der einzelnen Faserflore wird durch diese intensive Vernadelung eine exakte Einstellung der Elastizität erreicht sowie eine Umorientierung großer Faseranteile in einer Richtung senkrecht zu der Oberfläche. Die auf der Rückseite angeordnete Schaumstoffschicht steht dadurch mit der Oberfläche in einer die Saugwirkung erhöhenden Verbindung. Diese erhöhte Saugwirkung ergibt sich einerseits aus der weitgehend von äußerer Druckanwendung unabhängigen Speicherkapazität des Nadelvlieses, andererseits aus der großen Geschwindigkeit, mit der die offenporige Schaumstoffschicht Flüssigkeit aufzunehmen bzw. an das Nadelvlies abzugeben vermag. Die beanspruchte gegenseitige Zuordnung der beiden Elemente gewährleistet eine optimale gegenseitige Überlagerung der jeweiligen Eigenschaften.

Zusätzlich zu der gegenseitigen Verschlingung der Fasern infolge des durchgeführten Nadelungsvorganges kann das Vlies durch eine gegenseitige Verklebung seiner Fasern an den Kreuzungspunkten verfestigt sein. Die Art der angewendeten Verklebung muß jedoch so gewählt werden, daß die elastischen Eigenschaften nicht wesentlich beeinträchtigt werden. Geeignet ist z. B. eine Imprägnierung mit Kunststoff-Dispersionen auf Basis NBR- oder SBR-Latices oder Polyacrylaten oder Polyurethanen und anschließende Trocknung und Vernetzung durch Hitzeeinwirkung. Geeignet ist aber auch eine Verklebung mittels schmelzbarer bzw. in der Hitze klebrig werdender synthetischer Fasern, z. B. aus Polypropylen, Copolyamid oder Copolyester, die in einer Menge von 10 bis 35 % in die oben genannte Fasermischung gleichmäßig eingemischt werden und die bei einer trockenen Erhitzung des Nadelvlieses zu einer zusätzlichen Verfestigung des Nadelvlieses führen.

Die dargestellten Gummileisten haben ein dreieckiges Profil und eine im Vergleich zur Breite der Grundfläche relativ geringe Höhe. Hierdurch wird neben einer guten Rakelwirkung eine große Sicherheit gegen ein Umkippen beim Auftreffen seitlicher Belastungen erzielt. Die Oberkante der Gummileisten kann gerundet sein, und gegebenenfalls in einer solchen Ausführung einer parallel zur Achse verlaufende Rillung aufweisen. Daneben sind Polygonprofile möglich. In allen Fällen muß jedoch gewährleistet sein, daß das Verhältnis aus der Höhe und der Breite innerhalb des beanspruchten Bereiches liegt.

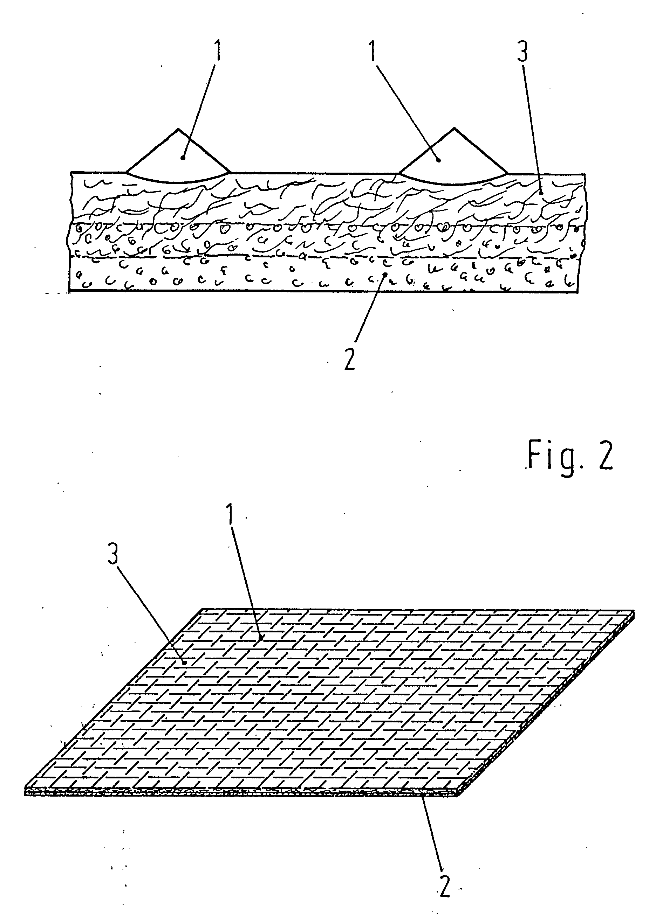

Die Gummileisten können einander in beliebiger Form zugeordnet sein. Eine bevorzugte Ausführung ist in Figur 2 wiedergegeben. Daneben sind auch parallel verlaufende Einzelleisten denkbar sowie gewundene oder kreisförmig in sich geschlossene Leisten.

## Ansprüche

1. Reinigungstuch zur Verwendung im Haushalt und für die gewerbliche Anwendung, bestehend aus einem weichelastischen Nadelvlies (3) mit einem Aufdruck aus sich reliefartig von der Oberfläche des Nadelvlieses abhebenden Gummileisten (1), dadurch gekennzeichnet, daß die Höhe der Gummileisten (1) das 0,2 bis 0,4-fache ihrer jeweiligen Breite beträgt, jedoch nicht mehr als das 0,5-fache der Dicke des Nadelvlieses (3), und daß dieses rückseitig mit einer kontinuierlichen Schicht (2) aus einem offenporigen Latexschaum versehen ist, die die der Oberfläche des Nadelvlieses gegenüberliegenden Fläche überragt und sich zu 10 bis 40 % der Dicke des Nadelvlieses in dieses hineinerstreckt.

2. Reinigungstuch nach Anspruch 1, dadurch gekennzeichnet, daß die Gummileisten (1) aus einem Werkstoff mit einer Härte von 60 bis 90 Shore A bestehen.

3. Reinigungstuch nach Anspruch 1 bis 2, dadurch gekennzeichnet, daß die Gummileisten (1) in sich geschlossene oder untereinander verbundene Poren enthalten, die insgesamt 10 bis 50 % des Volumens der Gummileisten einnehmen.

4. Reinigungstuch nach Anspruch 1 bis 3, dadurch gekennzeichnet, daß die Länge der Gummileisten (1) dem 3 bis 8-fachen Wert ihrer jeweiligen Breite entspricht.

5. Reinigungstuch nach Anspruch 4, dadurch gekennzeichnet, daß die gegenseitige Zuordnung der einzelnen Gummileisten (1) zueinander auf Lücke vorgenommen ist.

6. Reinigungstuch nach Anspruch 4 bis 5, dadurch gekennzeichnet, daß die Gummileisten (1) in einer regelmäßigen Raster angeordnet sind, und daß der jeweilige Mittelpunktsabstand unmittelbar benachbarter Gummileisten im wesentlichen identisch ist mit ihrer jeweiligen Länge.

7. Reinigungstuch nach Anspruch 1 bis 6, dadurch gekennzeichnet, daß die Eindringtiefe der kontinuierlichen Schicht (2) aus offenporigem Latexschaum in die der Oberfläche des Nadelvlieses gegenüberliegenden Fläche gleich der Höhe ist, mit der diese Schicht diese Fläche überragt.

## Claims

1. A cleaning cloth for household and industrial use consisting of a soft resilient needled nonwoven fabric (3) having an imprint of rubber strips (1) surmountig the top of the needled nonwoven fabric relief-like, characterised in that the height of the rubber strips (1) is about 0.2 to 0.4 times their width but not more than about 0.5 times the thickness of the nonwoven fabric (3), that the nowoven fabric is carrying on its underside a continuous layer (2) of an open-pore latex foam which projects above the surface opposing the top surface of the needled nonwoven fabric to the extent of about 10 to 40 percent of the thickness of the nonwoven fabric.

2. A cleaning cloth according to claim 1, characterised in that the rubber strips (1) consist of a material with a hardness of 60 to 90 Shore A.

3. A cleaning cloth according to claims 1 to 2, characterised in that the rubber strips (1) contain closed or interconnected pores to a total extent of 10 to 50 percent of the volume of the rubber strips.

4. A cleaning cloth according to claims 1 to 3, characterised in that the length of the rubber strips (1) is about 3 to 8 times their width.

5. A cleaning cloth according to claim 4, characterised in that the individual rubber strips (1) are offset relative to one another.

6. A cleaning cloth according to claims 4 to 5, characterised in that the rubber strips (1) are arranged in a regular pattern and that the center-to-center distance between adjacent rubber strips is substantially equal to their length.

7. A cleaning cloth according to claims 1 to 6, characterised in that the penetrating depth of the continuous layer (2) of open-pore latex foam into the surface opposing the top surface of the needled nonwoven fabric is equal to the height with which this layer is surmounting the surface.

## Revendications

1. Tissu de nettoyage pour l'utilisation dans le ménage et pour l'application professionnelle, consistant en une nappe aiguilletée souple (3) avec une empreinte de nervures de caoutchouc (1) dépassant en relief de la surface de la nappe aiguilletée, caractérisé en ce que la hauteur des nervures de caoutchouc (1) est de 0,2 à 0,4 fois leur largeur, mais pas plus de 0,5 fois l'épaisseur de la nappe aiguilletée (3) et en ce que celle-ci est munie sur sa face dorsale d'une couche continue (2) d'une mousse de latex à cellules ouvertes, qui dépasse de la face opposée à la surface de la nappe aiguilletée et qui pénètre dans la nappe aiguilletée de 10 à 40 % de l'épaisseur de celle-ci.

2. Tissu de nettoyage selon la revendication 1, caractérisé en ce que les nervures de caoutchouc (1) consistent en un matériau ayant une dureté Shore A de 60 à 90.

3. Tissu de nettoyage selon les revendications 1 et 2, caractérisé en ce que les nervures de caoutchouc (1) contiennent des pores fermés sur eux-mêmes ou reliés les uns aux autres, qui occupent au total 10 à 50 % du volume des nervures de caoutchouc.

4. Tissu de nettoyage selon les revendications 1 à 3, caractérisé en ce que la longueur des nervures de caoutchouc (1) correspond à 3 à 8 fois leur largeur.

5. Tissu de nettoyage selon la revendication 4, caractérisé en ce que la disposition mutuelle des nervures de caoutchouc (1) individuelles est effectuée sur des interstices les unes par rapport aux autres.

6. Tissu de nettoyage selon les revendications 4 et 5, caractérisé en ce que les nervures de caoutchouc (1) sont disposées suivant une trame régulière et en ce que la distance des points moyens de nervures de caoutchouc immédiatement voisines est chaque fois essentiellement identique à leur longueur.

7. Tissu de nettoyage selon les revendications 1 à 6, caractérisé en ce que la profondeur de pénétration de la couche continue (2) de mousse de latex à cellules ouvertes dans la face opposée à la surface de la nappe aiguilletée est égale à la hauteur dont cette couche dépasse de cette face.

Fig. 2